# EUROPÄISCHE PATENTSCHRIFT

(11) **EP 3 652 131 B1**
(45) Veröffentlichungstag und Bekanntmachung des Hinweises auf die Patenterteilung: **08.09.2021**
(21) Anmeldenummer: 18742451.0
(22) Anmeldetag: 13.07.2018
(51) Int. Cl.: C05G 3/00, C05C 9/00, C05G 5/30

(54) **MIT POLYHARNSTOFF UND POLYURETHAN BESCHICHTETE HARNSTOFFHALTIGE DÜNGEMITTELTEILCHEN UND VERFAHREN ZU DEREN HERSTELLUNG**
COATED UREA-CONTAINING FERTILIZER PARTICLES AND PROCESS FOR THE PRODUCTION THEREOF
PARTICULES D'ENGRAIS ENROBÉES CONTENANT DE L'URÉE ET PROCÉDÉ POUR LES PRÉPARER

(30) Priorität: 14.07.2017 DE 102017212104
(43) Veröffentlichungstag der Anmeldung: 20.05.2020
(73) Patentinhaber: EuroChem Agro GmbH, 68165 Mannheim (DE)
(72) Erfinder: PETERS, Nils, 67227 Frankenthal (DE)
(74) Vertreter: Féaux de Lacroix, Stefan
(86) Internationale Anmeldenummer: PCT/EP2018/069071
(87) Internationale Veröffentlichungsnummer: WO 2019/012101

(56) Entgegenhaltungen:
- EP-A1- 1 302 455
- EP-A2- 0 974 569

## Beschreibung

Die Erfindung betrifft beschichtete harnstoffhaltige Düngemittelteilchen und Verfahren zu ihrer Herstellung.

Beschichtete harnstoffhaltige Düngemittelteilchen sind an sich bekannt. Dabei handelt es sich üblicherweise um mit einer wasserunlöslichen, aber wasserdurchlässigen Schicht umhüllte körnige, zumindest teilweise wasserlösliche harnstoffhaltige Düngemittelteilchen. Durch die Umhüllung kann die Auflösungsgeschwindigkeit der Düngemittelteilchen gesteuert werden. So können Langzeitdüngemittel mit einer Wirksamkeit von bis zu mehreren Monaten erhalten werden.

Für die Umhüllung der harnstoffhaltigen Düngemittelteilchen sind unterschiedliche Systeme bekannt.

Einerseits kann das harnstoffhaltige Düngemittel nach Anfeuchten mit einer Isocyanatkomponente umgesetzt werden, um auf dem Düngemittelteilchen eine Polyharnstoffschicht auszubilden. Die WO 98/29359 beschreibt beispielsweise Verfahren zur Herstellung von mit Polyharnstoff verkapselten Düngemittelteilchen. Dazu wird beispielsweise Wasser auf die Düngemittelteilchen aufgebracht. Unmittelbar anschließend wird ein organisches aromatisches Diisocyanat, das Isocyanatgruppen enthält, auf die mit Wasser beschichteten Düngemittelteilchen aufgebracht, um eine Polyharnstoffschicht auszubilden.

Die US 2017/0036968 beschreibt ein Verfahren zur Herstellung verkapselter Düngemittel, wobei ebenfalls eine Isocyanatkomponente, die funktionelle Isocyanatgruppen aufweist, direkt auf die äußere Oberfläche des Harnstoffteilchens aufgebracht wird und sodann mit Umgebungsfeuchtigkeit umgesetzt wird, wodurch sich eine Polyharnstoffschicht ausbildet. Es ist ferner angegeben, dass auf die so beschichteten Düngemittelkörnchen noch eine Abdichtungsschicht aufgebracht werden kann, die organische Wachse, Triglyzeride, mikrokristalline, thermoplastische Polymere, Mineralöle, Petroleumwachse oder Kombinationen davon enthalten kann. Es ist weiterhin angegeben, dass diese Versiegelungsschicht unterschiedliche Polymere enthalten kann, um die Abriebfestigkeit und Barriereeigenschaften zu verbessern. Die Art der Polymere ist nicht näher definiert.

US 7,416,785 betrifft Polyurethan-verkapselte Düngemittelteilchen, die erhalten werden durch Umsetzung einer Isocyanatkomponente mit einem Polyol, abgeleitet von einem auf einem aromatischen Amin basierenden Initiator, auf den Düngemittelteilchen.

EP-A 0 974 609 betrifft Schwefel enthaltende Isocyanat-Zusammensetzungen, die zur Beschichtung von Düngemittelteilchen eingesetzt werden können. Beim Düngemittel kann es sich um Harnstoffdüngemittel handeln. Unterschiedliche Verfahrensweisen zur Herstellung von Polyurethan- und/oder Polyharnstoff-verkapselten Düngemittelteilchen werden beschrieben.

WO 2015/167988 betrifft Verfahren zur Bildung verkapselter Düngemittel. Dabei wird eine Isocyanatkomponente direkt auf die äußere Oberfläche des harnstoffhaltigen Düngemittelteilchens aufgebracht. Diese Isocyanatkomponente wird mit Umgebungsfeuchte umgesetzt, um eine Schicht mit Polyharnstoffbindungen zu erzeugen.

US 2014/0033779 betrifft Verfahren und Systeme zur Beschichtung granulärer Substrate. Dabei können Düngemittel mit einer Polyurethanschicht versehen werden, in denen die Polyolkomponente auf Cardol oder Cardanol basiert.

EP-A 0 867 422 betrifft beschichtete granuläre Düngemittel und Verfahren zu ihrer Beschichtung. Es wird unter anderem auf eine Beschichtung mit einem Polyisocyanat und einer Polyolkomponente hingewiesen, wobei die Polyolkomponente ein Kondensationsprodukt von Phenol und Aldehyd ist.

Die WO 2016/166100 beschreibt beschichtete körnige Stoffe, wobei die Beschichtung ein Harz umfasst, das das Reaktionsprodukt aus einer Polyolkomponente und einer Isocyanatkomponente umfasst. Das Harz wurde durch Zugabe eines Katalysators gehärtet, der eine eine Hydroxylgruppe enthaltende Aminverbindung umfasst.

EP 1 302 455 A1 betrifft die Verkapselung von Düngemitteln unter Verwendung schwefelhaltiger Polyole. Beim Düngemittel kann es sich um Harnstoffdüngemittel handeln. Bei dem Verfahren wird zunächst eine Polyisocyanat-Zusammensetzung auf Düngemittelteilchen aufgebracht, anschließend eine mit Isocyanaten reaktive Zusammensetzung, die zwei bis vier Hydroxylgruppen und ein Molekulargewicht von 106 bis 400 sowie ein Äquivalentgewicht von 31 bis 100 aufweist und 30 bis 80 Gew.-% Schwefel enthält, bezogen auf 100 Gew.-% der mit Isocyanat reaktiven Zusammensetzung. Durch dieses Verfahren wird eine schwefelhaltige Polyurethanverkapselung der Düngemittelteilchen erreicht. Die Beschichtungsschritte können auch mehrfach wiederholt werden.

EP 0 974 569 A2 betrifft eine unsymmetrische Polyharnstoffurethan-Düngemittelverkapselung. Die Verkapselung führt zur Ausbildung eines Polyharnstoff-Urethans, das eine verzögerte Freisetzung des Düngemittels ermöglichen soll. Zur Herstellung wird ein organisches Polyisocyanat mit mindestens einem Alkanolamin kombiniert.

Das Freisetzungsprofil derartig beschichteter Düngemittelteilchen ist nicht für alle Anwendungen geeignet. Um ein Langzeitdüngemittel herzustellen, sind oftmals hohe Schichtdicken der Oberflächenbeschichtung notwendig.

Aufgabe der vorliegenden Erfindung ist die Bereitstellung beschichteter harnstoffhaltiger Düngemittelteilchen, die die Nachteile der bekannten beschichteten Düngemittelteilchen vermeiden und mit geringen Beschichtungsdicken eine Langzeitwirkung der Düngemittelteilchen ermöglichen, bei der die Auflösegeschwindigkeit der Düngemittelteilchen im Boden stark herabgesetzt ist und damit die Freisetzung des Düngemittels über einen verlängerten Zeitraum möglich wird.

Die Aufgabe wird erfindungsgemäß gelöst durch beschichtete harnstoffhaltige Düngemittelteilchen, umfassend auf dem (unbeschichteten) harnstoffhaltigen Düngemittel mindestens eine Polyharnstoffschicht und weiterhin umfassend auf der mindestens einen Polyharnstoffschicht mindestens eine Polyurethanschicht, wobei das Gewichtsverhältnis der Polyharnstoffschicht zur Polyurethanschicht von 4:1 bis 1:4 beträgt und, sofern das beschichtete harnstoffhaltige Düngemittelteilchen mehrere Polyurethanschichten oder Polyharnstoffschichten aufweist, sich das Gewichtsverhältnis auf die Summe der jeweiligen Polyharnstoffschichten und Polyurethanschichten bezieht. Damit liegt unter der (innersten) Polyharnstoffschicht keine Polyurethanschicht vor.

Die Aufgabe wird zudem erfindungsgemäß gelöst durch ein Verfahren zur Herstellung von beschichteten harnstoffhaltigen Düngemittelteilchen, umfassend die folgenden Schritte:
A) Ausbildung mindestens einer Polyharnstoffschicht auf dem unbeschichteten harnstoffhaltigen Düngemittel, und sodann
B) Ausbildung mindestens einer Polyurethanschicht auf der mindestens einen Polyharnstoffschicht auf dem harnstoffhaltigen Düngemittel,
wobei das Gewichtsverhältnis der Polyharnstoffschicht zur Polyurethanschicht von 4:1 bis 1:4 beträgt und, sofern das beschichtete harnstoffhaltige Düngemittelteilchen mehrere Polyurethanschichten oder Polyharnstoffschichten aufweist, sich das Gewichtsverhältnis auf die Summe der jeweiligen Polyharnstoffschichten und Polyurethanschichten bezieht.

Der Begriff "harnstoffhaltiges Düngemittel" bedeutet dabei "harnstoffhaltiges Düngemittelteilchen". Danach erfolgt die Ausbildung der mindestens einen Polyharnstoffschicht auf den (unbeschichteten) harnstoffhaltigen Düngemittelteilchen und die Ausbildung der mindestens einen Polyurethanschicht auf der mindestens einen Polyharnstoffschicht auf den harnstoffhaltigen Düngemittelteilchen.

Es wurde erfindungsgemäß gefunden, dass eine mehrschichtige Beschichtung zunächst unter Ausbildung einer Polyharnstoffschicht und nachfolgend einer darüber liegenden Polyurethanschicht zu beschichteten harnstoffhaltigen Düngemittelteilchen führt, die eine langsame Freisetzung des harnstoffhaltigen Düngemittels erlauben. Damit ist eine kontrollierte Freisetzung über einen verlängerten Zeitraum möglich. Dabei kann mit geringen Schichtdicken und entsprechend geringeren Kosten bereits eine Langzeitwirkung des harnstoffhaltigen Düngemittels erreicht werden. Vorzugsweise liegen demnach (genau)eine Polyharnstoffschicht und (genau) eine Polyurethanschicht vor.

Erfindungsgemäß liegt die Polyharnstoffschicht innen auf dem (unbeschichteten) harnstoffhaltigen Düngemittelteilchen vor, auch da sie eine bessere Haftung an Harnstoff aufweist als ein Polyurethan. Daher wird die Polyurethanschicht außen auf die Polyharnstoffschicht aufgebracht. Die Polyharnstoffschicht kann damit auch als Haftvermittler für die Polyurethanschicht auf dem Harnstoff des harnstoffhaltigen Düngemittelteilchens dienen.

Die erfindungsgemäß zur Beschichtung eingesetzten harnstoffhaltigen Düngemittelteilchen sind an sich bekannt.

Die Düngemittelteilchen können in beliebiger äußerer Form und beliebiger Korngröße vorliegen. Typischerweise liegen die Düngemittelteilchen als Granulat oder Pellets vor. Pellets können dabei beispielsweise die Form eines Stäbchens, eines Zylinders, einer Kugel oder eine Ellipsoids aufweisen. Granulatkörner sind typischerweise asymmetrische Aggregate aus Pulverpartikeln.

Die Korngröße der Düngemittelteilchen liegt üblicherweise im Bereich von 0,2 bis 15 mm, besonders bevorzugt im Bereich von 1 bis 5 mm. Als Korngröße wird dabei der mittlere längste Durchmesser der Teilchen herangezogen. Die Korngrößenbestimmung kann beispielsweise optisch mit Hilfe eines Camsizer erfolgen.

Die Düngemittelteilchen enthalten Harnstoff. Vorzugsweise beträgt der Harnstoffgehalt im harnstoffhaltigen Düngemittel mindestens 30 Gew.-%, besonders bevorzugt mindestens 50 Gew.-%, insbesondere mindestens 85 Gew.-%, bezogen auf das harnstoffhaltige Düngemittel, das nicht beschichtet ist. Besonders bevorzugt wird Harnstoff als harnstoffhaltiges Düngemittel eingesetzt.

Zusätzlich zu Harnstoff können die harnstoffhaltigen Düngemittelteilchen weitere übliche Düngemittelkomponenten enthalten. Es kommen hierbei beispielsweise Einzel- oder Mehrnährstoffdünger in Betracht, die Nährstoffe, wie Stickstoff, Kalium, Phosphor, Schwefel, in beliebiger Kombination, typischerweise in Form ihrer Salze oder Oxide, enthalten. Ein Beispiel ist ein schwefelhaltiger Harnstoff mit einem Schwefelgehalt von 3 bis 15 Gew.-%, vorzugsweise 5 bis 10 Gew.-%, bezogen auf den schwefelhaltigen Harnstoff, z. B. YaraVera UREAS. Beispiele für Düngemittel, die neben Harnstoff in den erfindungsgemäßen Düngemittelteilchen vorliegen können, sind N-, NP-, NK-, PK- oder NPK-Düngemittel. Als Beispiele können Ammonsulfat, Ammonsulfatsalpeter, Kalkammonsalpeter, Ammoniumnitrat oder Kalziumcyanamid genannt werden. Neben den genannten Hauptbestandteilen können in den Düngemittelteilchen auch weitere Salze oder Spurenelemente vorliegen, beispielsweise von Magnesium, Eisen, Mangan, Kupfer, Molybdän und/oder Bor.

Derartige Zusatzstoffe oder Spurenelemente liegen typischerweise in Mengen von 0,1 bis 5 Gew.-%, besonders bevorzugt von 0,25 bis 3 Gew.-%, bezogen auf das harnstoffhaltige Düngemittel, vor.

Erfindungsgemäß besonders bevorzugt wird Harnstoff als alleiniges Düngemittel eingesetzt.

Das Düngemittel kann zudem einen weiteren Wirkstoff enthalten, wie Pflanzenschutzmittel, Pestizide, Wachstumsregulatoren, Spurenelemente, Bodenverbesserungsmittel, Nitrifiktionsinhibitoren, Ureaseinhibitoren, Pheromone, Repellents oder Gemische davon. Bevorzugt ist zumindest die Mitverwendung mindestens einen Ureaseinhibitors. Dabei beträgt die Menge des mitverwendeten Ureaseinhibitors vorzugsweise 0,02 bis 0,2 Gew.-%, besonders bevorzugt 0,03 bis 0,1 Gew.-%, bezogen auf den Harnstoff im harnstoffhaltigen Düngemittel. Geeignete Ureaseinhibitoren sind dem Fachmann bekannt. Geeignete Ureaseinhibitoren sind beispielsweise Phenylphosphorsäurediamid (PPD), N-Butylthiophosphorsäuretriamid (NBTPT oder NBPT), Monophenoxyphosphazen, β-Mercaptoethanol, Acetohydroxamsäure (AHA), Thioharnstoff oder Hydroxyharnstoff. Geeignete Ureaseinhibitoren sind beispielsweise in DE 10 2007 062 614 genannt. Dort sind geeignete (Thio)phosphorsäuretriamide und (Thio)phosphorsäurediamine beschrieben und in den angegebenen allgemeinen Formeln (I) und (II) zusammengefasst. Diese Ureaseinhibitoren können auch zusammen mit einem Amin mit einem Siedepunkt von mehr als 100 °C eingesetzt werden, um die Flüchtigkeit des Ureaseinhibitors zu vermindern.

Erfindungsgemäß bevorzugt ist der Einsatz mindestens eines (Thio)phosphorsäurediamids oder (Thio)phosphorsäuretriamids der allgemeinen Formeln (I) und (II), wie sie in DE 10 2007 062 614 beschrieben sind. Besonders bevorzugt wird NBPT bzw. NBTPT eingesetzt.

Übliche Nitrifikationsinhibitoren können verwendet werden, wie Dicyandiamid (DCD) oder Pyrazolverbindungen, wie 3,4-Dimethylpyrazol, 3,4-Dimethylpyrazolphosphat, sowie deren Umsetzungsprodukte mit Maleinsäureanhydrid, 2-(N-3,4-Dimethylpyrazol)bernsteinsäure, das ein Isomerengemisch von 2-(3,4-Dimethyl-1H-pyrazol-1-yl)bernsteinsäure und 2-(2,3-Dimethyl-1H-pyrazol-1-yl)bernsteinsäure darstellt. Für die Beschreibung dieses Nitrifikationsinhibitors kann beispielsweise auf WO 2015/086823 verwiesen werden. Geeignete Mengen sind 0,1 bis 1,0 Gew.-%, vorzugsweise 0,13 bis 0,6 Gew.-%, bezogen auf den Harnstoff im harnstoffhaltigen Düngemittel.

Typischerweise kann aufgrund der Beschichtung des harnstoffhaltigen Düngemittels auf die Mitverwendung eines Nitrifikationsinhibitors verzichtet werden.

Zur Herstellung der erfindungsgemäß beschichteten harnstoffhaltigen Düngemittelteilchen wird auf den unbeschichteten harnstoffhaltigen Düngemittelteilchen zunächst mindestens eine Polyharnstoffschicht ausgebildet und sodann auf der mindestens einen Polyharnstoffschicht nachfolgend mindestens eine Polyurethanschicht ausgebildet. Dies bedeutet, dass die Polyharnstoffschicht in direktem Kontakt mit dem Harnstoff des harnstoffhaltigen Düngemittelteilchens vorliegt.

Es können dabei bevorzugt genau eine Polyharnstoffschicht A) und eine Polyurethanschicht B) ausgebildet werden. Es ist jedoch auch möglich, mehrere Polyharnstoffschichten A) und mehrere Polyurethanschichten B) auszubilden. Dabei kann die gewünschte Gesamtschichtdicke auf die einzelnen Schichten aufgeteilt werden. Bevorzugt liegen keine anderen zusätzlichen Schichten vor, abgesehen von einer gegebenenfalls auf der Polyurethanschicht B) vorliegenden Antiverbackungsschicht.

Der Begriff "unbeschichtetes harnstoffhaltiges Düngemittelteilchen" bezieht sich auf harnstoffhaltige Düngemittelteilchen, auf die noch keine Polyharnstoffschicht und noch keine Polyurethanschicht aufgebracht wurde. Damit bedeutet der Begriff "unbeschichtet" "keine Polyharnstoffschicht oder Polyurethanschicht aufweisend". Gegebenenfalls können andere Beschichtungen bereits vorliegen, beispielsweise Beschichtungen mit Spurenelementen oder anderen Hilfsstoffen (wie Antibackmitteln)oder Haftvermittlern. Besonders bevorzugt wird in Schritt A) die mindestens eine Polyharnstoffschicht auf ein gänzlich unbeschichtetes harnstoffhaltiges Düngemittel aufgebracht, d.h. das feste harnstoffhaltige Düngemittel weist vor dem Ausbilden der Polyharnstoffschicht keine oberflächliche Beschichtung auf.

### Schritt A - Ausbildung der Polyharnstoffschicht

In einem ersten Schritt erfolgt die Ausbildung der Polyharnstoffschicht vorzugsweise durch Umsetzung einer organischen, mehr als eine Isocyanatgruppe enthaltenden Isocyanatkomponente mit Wasser auf der Oberfläche der harnstoffhaltigen Düngemittelteilchen. Dabei kann die Isocyanatkomponente mit flüssigem Wasser oder Dampf auf der Oberfläche der harnstoffhaltigen Düngemittelteilchen umgesetzt werden. Die Umgebung der Düngemittelteilchen kann dabei befeuchtet sein, beispielsweise durch Einsatz von feuchter Luft, oder die Feuchtigkeit kann als Dampf oder Flüssigkeit auf die harnstoffhaltigen Düngemittelteilchen aufgebracht werden.

Häufig reicht das bloße Vorliegen von beispielsweise aus der Umgebung stammender Luftfeuchte nicht aus zur Ausbildung der Polyharnstoffschicht. Daher ist es vorteilhaft, zur Ausbildung einer stabilen und gut anhaftenden Polyharnstoffschicht, in einem ersten Schritt Wasser oder Dampf auf die (unbeschichteten) harnstoffhaltigen Düngemittelteilchen aufzubringen, um mit Wasser an der Oberfläche beschichtete Düngemittelteilchen zu erhalten.

Vorzugsweise umfasst Schritt A) die folgenden Schritte:
A1) Aufbringen von Wasser oder Dampf auf harnstoffhaltige Düngemittelteilchen, um mit Wasser beschichtete Düngemittelteilchen zu erhalten,
A2) Aufbringen einer organischen, mindestens zwei Isocyanatgruppen enthaltenden Isocyanatkomponente auf die mit Wasser beschichteten Düngemittelteilchen und Umsetzung damit unter Ausbildung einer Polyharnstoffschicht auf dem harnstoffhaltigen Düngemittelteilchen.

In diesem ersten Schritt A) wird dabei kein Polyol auf die harnstoffhaltigen Düngemittelteilchen aufgebracht.

Die Polyharnstoffschicht enthält daher vorzugsweise keine Polyurethane. Geringe Mengen einer Polyurethanbeimischung sind dabei unkritisch. Der Polyurethananteil in der Polyharnstoffschicht sollte, bezogen auf die Polyharnstoffschicht, jedoch vorzugsweise nicht mehr als 15 Gew.-%, besonders bevorzugt nicht mehr als 10 Gew.-%, insbesondere nicht mehr als 5 Gew.-% betragen. Vorzugsweise liegen in der Polyharnstoffschicht keine Polyurethane vor.

Bei der Umsetzung der Isocyanatkomponente mit Wasser unter Ausbildung einer Polyharnstoffschicht wird damit erfindungsgemäß kein Polyol mitverwendet. Die Mitverwendung geringer Mengen an Polyol ist unkritisch, aber nicht bevorzugt. Vorzugsweise beträgt die Menge an Polyol in Schritt A) maximal 5 Gew.-%, besonders bevorzugt maximal 2 Gew.-%, insbesondere maximal 0,5 Gew.-%, bezogen auf die Menge der verwendeten Isocyanatkomponente.

Vorzugsweise wird Wasser in einer Menge von 0,25 bis 5 Gew.-%, besonders bevorzugt 0,5 bis 2 Gew.-%, insbesondere 0,3 bis 1,5 Gew.-%, bezogen auf den Harnstoffanteil im trockenen harnstoffhaltigen Düngemittelteilchen, auf das trockene harnstoffhaltige Düngemittelteilchen aufgebracht.

Vor, mit oder nach dem Wasser wird die Isocyanatkomponente aufgebracht. Es handelt sich um eine organische, im Mittel mehr als eine Isocyanatgruppe enthaltende Verbindung oder ein Gemisch derartiger Verbindungen. Vorzugsweise handelt es sich um mindestens zwei Isocyanatgruppen enthaltende Isocyanatkomponenten. Die Isocyanatkomponente umfasst typischerweise ein Polyisocyanat mit zwei oder mehr funktionellen Isocyanatgruppen. Geeignete Polyisocyanate sind beispielsweise aliphatische, cycloaliphatische, araliphatische und aromatische Isocyanate. Beispielsweise kann die Isocyanatkomponente ausgewählt sein aus Diphenylmethandiisocyanaten (MDI), oligomeren oder polymeren Diphenylmethandiisocyanten (PMDI) und Kombinationen davon. Polymere Diphenylmethandiisocyanate können auch als Polymethylenpolyphenylenpolyisocyanate bezeichnet werden. Neben MDI als bevorzugtem Isocyanat können auch Toluoldiisocyanate (TDI), Hexamethylendiisocyanate (HDI), Isophorondiisocyanate (IPDI), Naphthalindiisocyanate (NDI) und Kombinationen davon eingesetzt werden sowie die bei Schritt B) beschriebenen Isocyanatkomponenten.

Es kann sich bei der Isocyanatkomponente auch um ein Isocyanat-terminiertes Prepolymer handeln. Das Isocyanat-terminierte Prepolymer ist typischerweise das Umsetzungsprodukt eines Isocyanates und eines Polyols und/oder eines Polyamins. Dabei können neben den vorstehend genannten Isocyanaten unterschiedliche Polyole und Polyamine eingesetzt werden. Geeignete Prepolymere können damit Polyurethanbindungen aufweisen. Im Ergebnis werden dann Polyurethanpolyharnstoffe als Polyharnstoffschicht gebildet.

Wird beispielsweise ein Isocyanat-terminiertes Prepolymer von MDI und einem Polyol mit mindestens zwei Hydroxylgruppen eingesetzt, so enthält dieses Prepolymer Polyurethanbindungen.

In diesem Prepolymer kann das Polyol vorzugsweise ausgewählt sein aus Ethylenglykol, Diethylenglykol, Propylenglykol, Dipropylenglykol, Butandiol, Glyzerin, Trimethylolpropan, Triethanolamin, Pentaeritrit, Sorbit und Kombinationen davon. Es kann sich auch um Pfropfpolyole oder um Polymerpolyole handeln. Als Polyamine können beispielsweise Ethylendiamin, Toluoldiamin, Diaminodiphenylmethan und Polymethylenpolyphenylenpolyamine wie auch Aminoalkohole und deren Gemische genannt werden. Beispiel geeigneter Aminoalkohole sind Ethanolamin, Diethanolamin, Triethanolamin und Kombinationen davon.

Auch (modifizierte) Isocyanate können eingesetzt werden, wie in Absätzen [0031] bis [0041] der US 2017/0036968 beschrieben. Weitere mögliche Isocyanatkomponenten sind in der WO 2016/166100 auf Seite 10, Zeile 15 bis Seite 11, Zeile 2 erwähnt. Für Schritt A) geeignete Isocyanatkomponenten sind zudem in WO 98/29359, Seite 6, Zeile 26 bis Seite 11, Zeile 25, beschrieben. Cardanol und Cardol sowie ihre Herstellung sind ferner in DE-A-101 58 693 beschrieben.

Vorzugsweise ist die Isocyanatkomponente kein Prepolymer.

Die Isocyanatfunktionalität der Isocyanatkomponente liegt vorzugsweise im Bereich von 1,5 bis 4, besonders bevorzugt 2 bis 3.

Neben der Isocyanatkomponente können auch weitere übliche Additive mitverwendet werden, wie Katalysatoren, Füllstoffe, Weichmacher, Stabilisatoren, Vernetzer, Kettenverlängerer usw.

Für derartige Additive kann auf Absatz [0041] der US 2017/0036968 verwiesen werden.

Die Isocyanatkomponente wird vorzugsweise in einer Menge von 0,25 bis 5 Gew.-%, besonders bevorzugt 0,5 bis 3 Gew.-%, insbesondere 0,75 bis 1,5 Gew.-%, bezogen auf das unbeschichtete trockene harnstoffhaltige Düngemittelteilchen, eingesetzt. Besonders bevorzugt werden Isocyanatkomponente und Wasser im Gewichtsverhältnis von 0,5 bis 2 : 1, besonders bevorzugt 0,75 bis 1,5 : 1, insbesondere etwa 1 : 1, eingesetzt.

Das Gewicht der Polyharnstoffschicht, bezogen auf das unbeschichtete trockene harnstoffhaltige Düngemittelteilchen, beträgt vorzugsweise 0,5 bis 5 Gew.-%, besonders bevorzugt 0,6 bis 2,5 Gew.-%, insbesondere 0,75 bis 2,0 Gew.-%.

Die Umsetzung der Isocyanatkomponente mit Wasser auf dem harnstoffhaltigen Düngemittel erfolgt vorzugsweise in Gegenwart eines Katalysators. Dabei kann es sich um einen flüssigen oder gasförmigen Katalysator handeln. Geeignete Katalysatoren sind beispielsweise in der US 2017/0036968 in den Absätzen [0042] bis [0047] genannt. Ferner kann auf die in WO 2016/166100 beschriebenen Katalysatoren hingewiesen werden.

Die Ausbildung der Polyharnstoffschicht und/oder die Ausbildung der Polyurethanschicht können so in Gegenwart eines, vorzugsweise basischen, Katalysators erfolgen. Vorzugsweise wird dabei als Katalysator mindestens eine Aminverbindung eingesetzt, die besonders bevorzugt mit Isocyanaten reaktiv ist.

Dabei kann die Aminverbindung in einer Gashärtung oder Flüssighärtung eingesetzt werden, d. h. bei der Ausbildung der Polyharnstoffschicht und/oder der Ausbildung der Polyurethanschicht in gasförmiger Form oder flüssiger Form vorliegen.

Bei der sogenannten Gashärtung werden vorzugsweise niedrig siedende Amine eingesetzt, die vorzugsweise einen Siedepunkt von weniger als 100 °C, besonders bevorzugt einen Siedepunkt von weniger als 90 °C aufweisen. Beispiele geeigneter niedrig siedender Amine sind tertiäre Amine, speziell tertiäre Alkylamine. Beispiele geeigneter tertiärer Alkylamine sind solche, die C₁₋₄-Alkylreste, besonders bevorzugt C₁₋₃-Alkylreste, insbesondere Methyl oder Ethylreste, aufweisen. Beispielsweise können Triethylamin oder Dimethylethylamin eingesetzt werden. Weitere geeignete niedrig siedende tertiäre Alkylamine sind dem Fachmann bekannt.

Diese tertiären Amine reagieren typischerweise bei der Ausbildung der Polyharnstoffschicht und/oder der Ausbildung der Polyurethanschicht nicht mit ein, sondern können nach der Umsetzung aus diesen Schichten wieder herausgeblasen werden und gegebenenfalls wiederverwendet werden. Die Anwendung dieser Amine erfolgt vorzugsweise durch Begasung mit einem Katalysator-Luftgemisch.

Bei der sogenannten Flüssighärtung werden bevorzugt höhermolekulare Amine eingesetzt, die vorzugsweise einen Flammpunkt haben, der über der Umsetzungstemperatur liegt. Dann liegt der Flammpunkt vorzugsweise bei über 100 °C, besonders bevorzugt bei über 150 °C. Sie können auch einen Siedepunkt von mehr als 100 °C, vorzugsweise mehr als 150 °C aufweisen. Da sich diese höher molekularen Amine nicht einfach nach der Umsetzung aus der Polyharnstoffschicht und/oder der Polyurethanschicht herausblasen lassen, werden bevorzugt mit Isocyanatgruppen reaktive Amine eingesetzt. Bevorzugte Amine enthalten mit Isocyanatgruppen reaktionsfähige funktionelle Gruppen, so dass sie in die Polyharnstoffschicht und/oder Polyurethanschicht einreagieren und damit letztendlich in den Schichten verbleiben. So kann man ein Herauslösen aus der Beschichtung bei der Lagerung oder Anwendung des Düngemittels vermeiden.

Geeignete mit Isocyanaten reaktive Amine weisen vorzugsweise mindestens eine Hydroxylgruppe, primäre oder sekundäre Aminogruppe auf. Diese Gruppen sind zur Umsetzung mit Isocyanaten befähigt. Bevorzugt enthalten die höhermolekularen Amine eine oder zwei mit Isocyanatgruppen reaktionsfähige funktionelle Gruppen. Besonders bevorzugt werden Aminverbindungen eingesetzt, die mindestens eine Hydroxylgruppe enthalten und die insbesondere bevorzugt einen Flammpunkt von mehr als 100 °C, speziell mehr als 150 °C aufweisen.

Beispielhafte höher siedende Amine weisen einen Flashpunkt im Bereich von 30 bis 100 °C, besonders bevorzugt 35 bis 92 °C, insbesondere 40 bis 88 °C, auf. Beispielsweise können sie einen Flashpunkt von etwa 40 °C oder etwa 88 °C aufweisen.

Diese höhermolekularen Amine werden vorzugsweise in einem Sprühnebel auf die harnstoffhaltigen Düngemittelteilchen aufgebracht.

Bevorzugte Katalysatoren sind in der WO 2016/166100 auf Seite 11, Zeile 14 bis Seite 17, Zeile 17 beschrieben. Beispiele geeigneter Katalysatoren sind Jeffcat® Z-110 (N,N,N'-Trimethylaminoethyl-ethanolamin) Jeffcat® ZR-50 (N,N-Bis(3-dimethylaminopropyl)-N-isopropanolamin), Jeffcat® ZF-10 (N,N,N',-Trimethyl-N'-hydroxyethylbisaminoethylether) und Jeffcat® DPA (N-(3-Dimethylaminopropyl)-N,N-diisopropanolamin). Die benötigte Katalysatormenge hängt von der gewünschten Aushärtezeit und von der Arbeitstemperatur ab. Im Allgemeinen werden etwa 0,1 bis 20 Gew.-%, vorzugsweise 1 bis 10 Gew.-%, insbesondere 3 bis 6 Gew.-% an Katalysator eingesetzt, bezogen auf die eingesetzte Gesamtmenge aus Wasser und Isocyanatkomponente.

Besonders bevorzugt wird das Wasser auf dem trockenen harnstoffhaltigen Düngemittelteilchen vorgelegt, sodann wird die Isocyanatkomponente auf das befeuchtete harnstoffhaltige Düngemittelteilchen aufgebracht und anschließend wird der Katalysator auf das befeuchtete, die Isocyanatkomponente enthaltende harnstoffhaltige Düngemittelteilchen aufgebracht.

Das Aufbringen des Katalysators beispielsweise in einem Sprühnebel ist in der WO 2016/166100 auf Seite 19, Zeile 17 bis Seite 20, Zeile 4 beschrieben.

Alternativ kann eine Begasung mit einem Katalysator-Luftgemisch erfolgen.

Die Umsetzungstemperatur beträgt vorzugsweise 30 bis 150 °C, besonders bevorzugt 50 bis 100 °C.

### Schritt B) - Ausbildung der Polyurethanschicht

Nach der Ausbildung der mindestens einen Polyharnstoffschicht auf dem harnstoffhaltigen Düngemittel erfolgt die Ausbildung der mindestens einen Polyurethanschicht auf der mindestens einen Polyharnstoffschicht. Von innen nach außen weisen die beschichteten harnstoffhaltigen Düngemittelteilchen dann einen Kern aus Düngemittelteilchen, eine erste Polyharnstoffschicht und eine zweite Polyurethanschicht auf, wobei jeweils eine oder mehrere Polyharnstoffschichten und Polyurethanschichten vorliegen können.

Die Ausbildung der mindestens einen Polyurethanschicht auf der mindestens einen Polyharnstoffschicht auf dem harnstoffhaltigen Düngemittel erfolgt in der Regel durch Aufbringen einer Polyolkomponente und einer Isocyanatkomponente auf das mit einer Polyharnstoffschicht beschichteten Düngemittelteilchen und Umsetzung der Polyolkomponente mit der Isocyanatkomponente, gegebenenfalls in Gegenwart von Katalysatoren, zu einer Polyurethanschicht.

Die Ausbildung der Polyurethanschicht erfolgt vorzugsweise in Gegenwart eines, vorzugsweise basischen, Katalysators. Dabei wird vorzugsweise eine Aminverbindung eingesetzt, die besonders bevorzugt mit Isocyanaten reaktiv ist.

Besonders bevorzugt wird eine Aminverbindung eingesetzt, wie sie bereits vorstehend für Schritt A) beschrieben ist. In Schritten A) und B) können voneinander verschiedene oder bevorzugt identische Katalysatoren eingesetzt werden.

Bei Mitverwendung eines Katalysators beträgt die Menge an eingesetztem Katalysator, bezogen auf die Gesamtmenge an Polyolkomponente und Isocyanatkomponente, vorzugsweise 0,1 bis 20 Gew.-%, besonders bevorzugt 1 bis 10 Gew.-%, insbesondere 3 bis 8 Gew.-%.

Die Polyolkomponente und die Isocyanatkomponente können nacheinander, gleichzeitig oder miteinander vermischt auf das harnstoffhaltige Düngemittelteilchen aufgebracht werden.

Der Katalysator kann bevorzugt der Polyolkomponente oder der Mischung aus Polyolkomponente und Isocyanatkomponente zugesetzt werden. Er kann auch nach Aufbringen der Polyolkomponente und der Isocyanatkomponente auf das harnstoffhaltige Düngemittelteilchen aufgebracht werden, z. B. in einem Sprühnebel oder durch Begasung mit einem Katalysator-Luftgemisch.

Für eine Beschreibung geeigneter Katalysatoren kann wiederum auf WO 2016/166100, Seite 11, Zeile 14 bis Seite 17, Zeile 17 verwiesen werden.

Die Isocyanatkomponente kann wie vorstehend in Schritt A) beschrieben aufgebaut sein und kann ausgewählt sein aus aliphatischen, cycloaliphatischen, aromatischen und heterocyclischen Isocyanaten und Gemischen davon. Die Isocyanate weisen vorzugsweise im Mittel mehr als 1,5 Isocyanatgruppen in einem Molekül auf. Bevorzugt sind Isocyanate mit mindestens zwei Isocyanatgruppen in einem Molekül oder deren Oligomere oder Polymere.

Beispiele für geeignete Isocyanate sind z. B. wie vorstehend oder nachstehend beschrieben:
Toluol-2,4-diisocyanat, Toluol-2,6-diisocyanat, 3-Phenyl-2-ethylendiisocyanat, 1,5-Naphthalindiisocyanat, 4-Methoxy-1,3-diphenyldiisocyanat, 4-Chlor-1,3-phenyldiisocyanat, Diphenylmethan-4,4'-diisocyanat, Diphenylmethan-2,2'-diisocyanat, 4-Brom-1,3-phenyldiisocyanat, 4-Ethoxy-1,3-phenyldiisocyanat, 2,4'-Diisocyanatdiphenylether, 5,6-Dimethyl-1,3-phenyldiisocyanat, 2,4-Dimethyl-1,3-phenyldiisocyanat, 4,4'-Diisocyanatodiphenylether, 4,6-Dimethyl-1,3-phenyldiisocyanat, 9,10-Anthracendiisocyanat, 2,4,6,-Toluoltriisocyanat, 2,4,4'-Triisocyanatodiphenylether, 1,4-Tetramethylendiisocyanat, 1.6-Hexamethy-lendiisocyanat, 1,10-Decamethylendiisocyanat, 1,3-Cyclohexylendiisocyanat, 4,4'-bis-(Cyclohexylisocyanat), Xyloldiisocyanat, 1-Isocyanato-3-methylisocyanato-3,5,5-trimethylcyclohexan (Isophorondiisocyanat), 1,3-Bis-(isocyanato-1-methylethyl)benzol (m-TMXDI), 1,4-Bis-(isocyanato-1-methylethyl)benzol (p-TMXDI).

Bevorzugt sind aromatische Isocyanate wie Toluoldiisocyanat, Diphenylmethandiisocyanat (MDI) usw. sowie auf dem Fachgebiet übliche Oligomere oder Polymere auf dieser Basis, vergleiche US 2013/0305796, Absätze [0021] bis [0025]. Auch die vorstehend genannten Isocyanat-terminierten Prepolymere können eingesetzt werden.

In der Isocyanatkomponente beträgt die Viskosität vorzugsweise 75 bis 600 mPa s, besonders bevorzugt 100 bis 400 mPa s, insbesondere 150 bis 300 mPa s. Der Gehalt an Isocyanatgruppen beträgt vorzugsweise 20 bis 50 %, besonders bevorzugt 25 bis 40 %, insbesondere 30 bis 35 %.

Die Isocyanatkomponenten in Schritten A) und B) können identisch oder voneinander verschieden sein.

Die Polyolkomponente kann aus bekannten Polyolkomponenten ausgewählt sein, die zur Polyurethanherstellung üblich sind. Für eine Beschreibung kann beispielsweise auf EP-A-0 230 601, WO 03/048075, WO 2016/166100, DE-A-101 58 693, WO 2012/109432, US 2013/0305796 sowie US 7,416,785 verwiesen werden. Die Polyolkomponente weist im Mittel vorzugsweise mehr als 1,5 Hydroxylgruppen auf, besonders bevorzugt mindestens zwei Hydroxylgruppen.

Bevorzugt ist das mindestens eine Polyol ausgewählt aus Cardol, Cardanol, Derivaten oder Oligomeren von Cardol oder Cardanol, Kondensationsprodukten von Phenol und mindestens einem Aldehyd, wie Formaldehyd, oder Gemischen davon.

Derivate von Cardol und Cardanol sind Umsetzungsprodukte, in denen die funktionellen Gruppen von Cardol und Cardanol mit modifizierenden Verbindungen chemisch umgesetzt sind. Dabei sind die funktionellen Gruppen typischerweise mit niedermolekularen Verbindungen chemisch umgesetzt.

Mögliche Derivate von Cardol und Cardanol können durch Maleinieren, Epoxidieren oder Hydrieren der in den Seitenketten vorhandenen Doppelbindungen erhalten werden. Diese können auch weiter mit Wasser oder einem Alkohol umgesetzt werden, wobei in den Seitenketten Diole oder α-Hydroxyether entstehen. Sie können auch nach dem Maleinieren, Epoxidieren oder Hydrieren mit einem Aldehyd weiter umgesetzt werden.

Oligomere sind Stoffe, die zwei oder mehr, vorzugsweise zwei bis acht, Einheiten von Cardol oder Cardanol in einer chemischen Verbindung aufweisen.

Cardol und Cardanol sind substituierte Phenole bzw. Resorcine und können aus dem nachwachsenden Rohstoff Cashewschalenöl (Englisch: cashew nutshell liquid (CNSL)) gewonnen werden. Cashewschalenöl wird aus dem Samen des Cashewbaumes gewonnen und besteht zu etwa 90 Gew.-% aus einer Anacardsäure und zu etwa 10 Gew.-% aus Cardol. Durch Hitzebehandlung in saurer Umgebung entsteht durch Decarboxylierung Cardanol, ein substituiertes Phenol, sowie Cardol. Cardol und Cardanol können durch Destillation aus derartigen Gemischen gewonnen werden. Dabei können auch Oligomere dieser Verbindungen entstehen. Cardol, Cardanol und deren Derivate lassen sich nach bekannten Verfahren, beispielsweise durch Umsetzung mit Formaldehyd, oligomerisieren. Sowohl die monomeren als auch die oligomeren Verbindungen eignen sich aufgrund ihrer Hydroxyfunktionalitäten gut für die Umsetzung mit Isocyanaten. Sie können damit anstelle von oder im Gemisch mit Phenolen in Formaldehyd eingesetzt werden.

Kondensationsprodukte von Phenol und mindestens einem Aldehyd sind dem Fachmann bekannt. Dabei können auch von Phenolen abgeleitete aromatische Verbindungen eingesetzt werden, wie sie in WO 2016/166100 auf Seite 7, Zeile 24 bis Seite 8, Zeile 25 beschrieben sind.

Die Polyolkomponente enthält vorzugsweise mindestens eine Verbindung, ausgewählt aus Cardol oder Cardanol, deren Derivaten oder deren Oligomeren. Ihr Anteil an der Polyolkomponente beträgt vorzugsweise 10 bis 100 Gew.-%, besonders bevorzugt 10 bis 90 Gew.-%, insbesondere 30 bis 80 Gew.-%.

Ferner kann in der Polyolkomponente ein Kondensationsprodukt von Phenol und mindestens einem Aldehyd, wie Formaldehyd, vorzugsweise in einer Menge von 10 bis 90 Gew.-%, besonderes bevorzugt 20 bis 70 Gew.-%, bezogen auf die Polyolkomponente, eingesetzt werden.

Gemäß einer Ausführungsform enthält die Polyolkomponente 25 bis 40 Gew.-% eines Kondensationsproduktes aus Phenol und Formaldehyd, 5 bis 15 Gew.-% Cardanol, 50 bis 60 Gew.-% Rizinusöl, 5 bis 10 Gew.-% Diethylenglykol, wobei die Gesamtmenge 100 Gew.-% ergibt.

Die erfindungsgemäß eingesetzte Polyolkomponente weist vorzugsweise eine Viskosität von 500 bis 4.000 mPa s, besonders bevorzugt 750 bis 3.000 mPa s, insbesondere 1.000 bis 2.000 mPa s, auf. Die OH-Zahl beträgt vorzugsweise 100 bis 700 mg KOH/g, besonders bevorzugt 150 bis 500 mg KOH/g, insbesondere 200 bis 400 mg KOH/g.

Für die Polyolkomponente und Isocyanatkomponente in Schritt B) geeignete Polyol- und Isocyanatkomponenten sind beispielsweise von ASK Chemicals, Hilden, erhältlich, beispielsweise als ASKOCOAT™ 420 und ASKOCOAT™ 500. Auch Aminkatalysatoren sind beispielsweise als Katalysator 804 und Katalysator 806 von ASK Chemicals erhältlich.

Die Polyolkomponente kann sich zudem von einem aromatischen Amin-basierten Initiator ableiten. Zusätzlich oder alternativ kann ein aromatischer oder aliphatischer Polyetherpolyol oder Polyesterpolyol eingesetzt werden. Geeignete derartige Polyole sind in US 2013/0305796, Absätze [0026] bis [0039], beschrieben.

Es können Polyesterole, Polyetherole, Polyetheramine, und/oder Polycarbonatdiole mit z.B. einem zahlenmittleren Molekulargewicht (Mₙ) von 100 bis 12.000 g/mol, einem Hydroxylwert von 10 bis 2.000 mg KOH/g und deiner Funktionalität von 2 bis 8 verwendet werden, vergleiche EP-B-2 649 115.

Die Polyolkomponente kann, sofern gewünscht, Lösungs- oder Verdünnungsmittel und/oder Weichmacher enthalten. Hierdurch können Viskosität und Anwendungseigenschaften der Polyolkomponente eingestellt werden. Für eine Beschreibung der Weichmacher, Lösungsmittel und Verdünnungsmittel und der Polyolkomponente insgesamt kann auf WO 2016/166100, Seite 6, Zeile 20 bis Seite 10, Zeile 14 verwiesen werden.

Die Polyolkomponente und Isocyanatkomponente werden erfindungsgemäß bevorzugt unverdünnt und damit ohne Mitverwendung eines Lösungs- oder Verdünnungsmittels eingesetzt.

Durch die bevorzugte Lösemittelfreiheit wird ein Auslaugen von Beschichtungsbestandteilen in den Boden bei einer späteren Anwendung vermieden.

Die Polyolkomponente und Isocyanatkomponente werden in etwa stöchiometrischen Mengen eingesetzt. Ein Überschuss von bis zu 30 Mol-%, vorzugsweise bis zu 20 Mol-%, insbesondere bis zu 10 Mol-% einer der Komponenten gegenüber der anderen ist möglich. Das Molverhältnis beträgt so vorzugsweise 1,3:1 bis 1:1,3, vorzugsweise 1,2:1 bis 1:1,2, insbesondere 1,1:1 bis 1:1,1.

Die Umsetzungstemperatur beträgt vorzugsweise 30 bis 150 °C, besonders bevorzugt 50 bis 100 °C.

Das Aufbringen des Wassers, der Isocyanatkomponente und der Polyolkomponente in Schritten A) und B) kann auf beliebige geeignete Weise erfolgen.

Beispielsweise kann die Aufbringung in einer rotierenden Trommel erfolgen, bei der die zu beschichtenden Düngemittelteilchen während des gesamten Beschichtungsvorgangs in Bewegung gehalten werden. Wasser, Isocyanatkomponente aus Schritt A), Polyolkomponente und Isocyanatkomponente aus Schritt B) können einzeln oder in den in Schritten A) und B) verwendeten Einsatzverhältnissen vorgemischt auf die harnstoffhaltigen Düngemittelteilchen aufgebracht werden. Der Katalysator kann dabei jeweils ebenfalls vorgemischt oder als Einzelkomponente aufgebracht werden. Die Katalysatoraufbringung erfolgt vorzugsweise in Form eines Sprühnebels, beispielsweise durch Versprühen mit Druckluft oder Airless-Spritzen. Zu einer näheren Beschreibung kann auf WO 2016/166100, Seite 19, Zeile 9 bis Seite 20, Zeile 11 verwiesen werden.

Anstelle einer rotierenden Trommel können auch beispielsweise Wirbelschichtanlagen oder röhrenförmige Anlagen oder Förderschnecken verwendet werden. Dabei kommt es auf die mechanische Bewegung der harnstoffhaltigen Düngemittelteilchen an, so dass sich die aufgebrachten Verbindungen möglichst gleichflächig auf ihrer Oberfläche verteilen.

Die Aufbringung in Schritten A) und B) erfolgt vorzugsweise bei einer Temperatur im Bereich von 10 °C bis 160 °C, besonders bevorzugt 20 °C bis 100 °C, insbesondere 30 °C bis 95 °C. Die Temperatur kann dabei je nach gewünschten Aushärtungsbedingungen für die Beschichtungen gewählt werden.

Es ist erfindungsgemäß möglich, auch Teilmengen der in Schritten A) und B) eingesetzten Komponenten aufzubringen und auszuhärten, so dass jeder der Schritte A) und B) mehrfach durchgeführt wird und die Gesamtschichtdicke der Polyharnstoffschicht und/oder Polyurethanschicht durch mehrfachen Auftrag erhalten wird.

Die Polyolkomponente und Isocyanatkomponente werden in Schritt B) vorzugsweise in einer solchen Menge aufgebracht, dass die Polyurethanschicht in einer Menge von mindestens 0,5 Gew.-%, vorzugsweise 0,75 bis 5 Gew.-%, besonders bevorzugt 0,75 bis 2,5 Gew.%, insbesondere 1 bis 2,0 Gew.-%, bezogen auf die unbehandelten harnstoffhaltigen Düngemittelteilchen, ausgebildet wird.

Die Schichtdicken oder Mengen/Gewichte der Polyharnstoffschicht und der Polyurethanschicht können dabei gleich oder voneinander verschieden sein. Bevorzugt kann das Mengenverhältnis (Gewichtsverhältnis) der Polyharnstoffschicht zur Polyurethanschicht von 3:1 bis 1:3, speziell bevorzugt 2:1 bis 1:2 betragen. Vorzugsweise sind die Schichtdicken oder Mengen/Gewichte etwa gleich und liegen in einem Mengenverhältnis (Gewichtsverhältnis) der Polyharnstoffschicht zur Polyurethanschicht von 1:2 bis 2:1, vorzugsweise 1:1,5 bis 1,5:1, insbesondere 1:1,3 bis 1,3:1, speziell 1:1,1 bis 1:1,3 vor. Weist das beschichtete harnstoffhaltige Düngemittelteilchen mehrere Polyurethanschichten oder Polyharnstoffschichten auf, so beziehen sich die Schichtdicken oder Mengenverhältnisse/Gewichtsverhältnisse auf die Summe der jeweiligen Polyharnstoffschichten und Polyurethanschichten. Vorzugsweise liegen jeweils nur eine Polyharnstoffschicht und Polyurethanschicht vor.

Die Gesamtmenge an Polyharnstoffschicht und Polyurethanschicht, bezogen auf das unbeschichtete harnstoffhaltige Düngemittel, beträgt vorzugsweise 1,0 bis 5,5 Gew.-%, besonders bevorzugt 1,5 bis 4,0 Gew.-%, insbesondere 1,8 bis 3,5 Gew.-%.

Bei Vorsehen höherer Mengen an Polyharnstoffschicht und/oder Polyurethanschicht steigen die Kosten für die Beschichtung des Düngemittels. Beim Vorsehen geringerer Mengen kann unter Umständen eine vollständige Umhüllung der harnstoffhaltigen Düngemittelteilchen mit der Polyharnstoffschicht und der Polyurethanschicht schwierig werden.

Damit ist es erfindungsgemäß auch möglich, eine oder beide der Schichten dicker als angegeben vorzusehen. Vorzugsweise werden jedoch die vorstehenden Mengenverhältnisse und Gesamtmengen für die Polyharnstoffschicht und die Polyurethanschicht eingehalten, um mit möglichst geringem Aufwand Mengen eine Langzeitwirkung der Düngemittelteilchen zu erreichen, indem die Auflösegeschwindigkeit der Düngemittelteilchen im Boden stark herabgesetzt ist und die Freisetzung des Düngemittels über einen verlängerten Zeitraum möglich wird.

Die Polyurethanschicht ist vorzugsweise hydrophob, um einen Wasserzugriff nach dem Ausbringen des Düngemittels zu erschweren. Die Polyurethanschicht kann hydrophober als die Polyharnstoffschicht sein.

Gegenüber einem nur mit einer Polyharnstoffschicht oder nur mit einer Polyurethanschicht beschichteten harnstoffhaltigen Düngemittelteilchen, bei denen die Gesamtschichtdicke identisch ist mit der erfindungsgemäßen Beschichtung, wird erfindungsgemäß einer wesentlich stärker verzögerte Freisetzung beobachtet. Um ein vergleichbares Freisetzungsverhalten zu erreichen, sind wesentlich geringere Gesamtbeschichtungsdicken erforderlich. Hierdurch kann die Gesamtmenge an aufzubringenden organischen Beschichtungskomponenten deutlich vermindert werden. Mit beiden Schichten bzw. Schritten A) und B) bzw. jeder der beiden Schichten sollte vorzugsweise eine vollständige Umhüllung der Düngemittelteilchen erfolgen.

Es ist erfindungsgemäß möglich, neben der Polyharnstoffschicht und Polyurethanschicht weitere Versiegelungsschichten vorzusehen, wie sie beispielsweise in US 2013/0305796 in Absätzen [0057] bis [0059] beschrieben sind. Vorzugsweise wird erfindungsgemäß auf derartige weitere Beschichtungen verzichtet, da bereits durch die Polyharnstoffschicht und Polyurethanschicht die gewünschten Produkt- und Freisetzungseigenschaften erhalten werden. Falls erforderlich, kann auf der Polyurethanschicht eine Antiverbackungsschicht (anti-caking) vorgesehen werden, z. B. aus Wachsen oder Ölen, wie in US 2017/0036968 in Absatz [0056] beschrieben.

Durch die Anpassung der Schichtdicken der Polyharnstoffschicht und Polyurethanschicht kann das Freisetzungsverhalten für das harnstoffhaltige Düngemittel gezielt angepasst werden. Wasser kann durch die Beschichtungslagen langsam in das Granulatkorn eindringen und die Nährstoffe des Düngemittelteilchens auflösen. Die Geschwindigkeit der Nährstofffreisetzung wird durch die Dicke der Beschichtung, die Bodenfeuchtigkeit und die Temperatur gesteuert, wobei dünnere Beschichtungen und höhere Temperaturen zu einer schnelleren Freisetzung führen. Die Freisetzungszeit kann beispielsweise auf 0,5 bis 12 Monate, vorzugsweise 1 bis 8 Monate, insbesondere 1,5 bis 6 Monate, angepasst werden.

Die Herstellung der beschichteten harnstoffhaltigen Düngemittelteilchen kann beispielsweise wie in WO 2012/109432 oder WO 2016/16600 beschrieben erfolgen.

Die Erfindung betrifft auch nach dem beschriebenen Verfahren erhältliche beschichtete harnstoffhaltige Düngemittelteilchen. Dabei beträgt das Gewichtsverhältnis der mindestens einen Polyharnstoffschicht zur mindestens einen Polyurethanschicht vorzugsweise 4:1 bis 1:4, besonders bevorzugt 3:1 bis 1:3, insbesondere 2:1 bis 1:2.

Die Erfindung betrifft zudem beschichtete harnstoffhaltige Düngemittelteilchen, umfassend auf dem harnstoffhaltigen Düngemittel mindestens eine Polyharnstoffschicht und weiterhin umfassend auf der mindestens einen Polyharnstoffschicht mindestens eine Polyurethanschicht.

Dabei enthält die Polyurethanschicht vorzugsweise das Umsetzungsprodukt mindestens einer Isocyanatkomponente mit mindestens einer Polyolkomponente, die mindestens ein Polyol, ausgewählt aus Kondensationsprodukten von Phenol und mindestens einem Aldehyd, wie Formaldehyd, Cardol, Cardanol, Derivaten oder Oligomeren von Cardol oder Cardanol oder Gemischen davon, enthält.

Die Düngemittelteilchen enthalten zudem vorzugsweise mindestens einen Ureaseinhibitor. Die Zusammensetzung der Düngemittelteilchen ist wie vorstehend beschrieben.

Die Erfindung wird durch die nachstehenden Beispiele näher erläutert.

### Beispiele

### Beispiel 1

2 kg Harnstoffgranulat wurden für zwölf Stunden auf 70 °C vorgeheizt und anschließend in eine auf eine auf 70 °C temperierte Dragiertrommel überführt. In der Dragiertrommel wurde das Harnstoffgranulat mit etwa 30 Umdrehungen pro Minute der Dragiertrommel durchmischt.

20 g demineralisiertes Wasser wurden zum Granulat hinzugegeben.

Nach der Benetzung des Granulats wurden 20 g Diphenylmethandiisocyanat (MDI) innerhalb von einer Minute zum befeuchteten Granulat gegeben. Nach der vollständigen Benetzung der Harnstoffgranulatteilchen wurde mit kurzen Sprühstößen unter Verwendung von Druckluft als Trägergas 2 ml eines hydroxylgruppenhaltigen Aminkatalysators mit einem Flashpunkt von etwa 88 °C auf das benetzte Material aufgebracht.

Unter weiterem Drehen der Dragiertrommel wurde abgewartet, bis das Material wieder rieselfähig war.

Sodann wurde eine Mischung aus 13 g Polyol auf Basis von Kondensationsprodukten von Phenol und Formaldehyd sowie Cardol und Cardanol mit 13 g Diphenylmethandiisocyanat (MDI) innerhalb von einer Minute zum beschichteten Granulat gegeben. Anschließend wurden 2 ml des hydroxylgruppenhaltigen Aminkatalysators mit einem Flashpunkt von etwa 88 °C mit der Sprühpistole in schnellen Sprühstößen auf das benetzte Granulat gegeben. Die Dragiertrommel wurde solange weiter gedreht, bis das Material wieder rieselfähig war. Anschließend wurde das beschichtete Granulat abgekühlt und entnommen.

Als Isocyanat in der ersten Beschichtung wurde Askocoat™ 500 eingesetzt. Als Polyol im zweiten Schritt wurde Askocoat™ 420 eingesetzt. Als Isocyanat im zweiten Schritt wurde Askocoat™ 500 eingesetzt. Als Katalysator wurde Katalysator 806 eingesetzt. Alle Einsatzstoffe sind von ASK Chemicals GmbH, Hilden, erhältlich.

Bezogen auf das unbehandelte Harnstoffgranulat wurden 1 Gew.-% der Polyharnstoffschicht (Primerbeschichtung) und 1,3 Gew.-% der Polyurethanschicht aufgebracht. Erfindungsgemäß liegt die Schichtdicke in einem Bereich von etwa 25 bis etwa 50 µm.

### Vergleichsbeispiel 2

Es wurde wie in Beispiel 1 vorgegangen, jedoch wurden nur 2,3 Gew.-% der ersten Polyharnstoffschicht aufgetragen. Auf eine Polyurethanschicht wurde verzichtet.

### Vergleichsbeispiel 3

Es wurde wie in Beispiel 1 vorgegangen, dabei wurde jedoch auf die Polyharnstoffschicht (Primerbeschichtung) verzichtet. Stattdessen wurden 2,3 Gew.-% der Polyurethanschicht aufgetragen.

### Beispiel 4

Die gemäß Beispiel 1, Vergleichsbeispiel 1 und Vergleichsbeispiel 2 hergestellten Harnstoffgranulate wurden einem Freisetzungstest unterzogen. 5 g des jeweiligen Granulats wurden bei 25 °C in 45 g Wasser gegeben, darin leicht bewegt und sodann stehen gelassen. In Zeitabständen wurde die Menge an frei gesetztem Harnstoff aus dem Granalien bestimmt. Dann wurden die Proben umgeschwenkt. Nachfolgend wurden jeweils 300 µl Lösung entnommen, und der Harnstoffgehalt in der Lösung wurde refraktometrisch bestimmt.

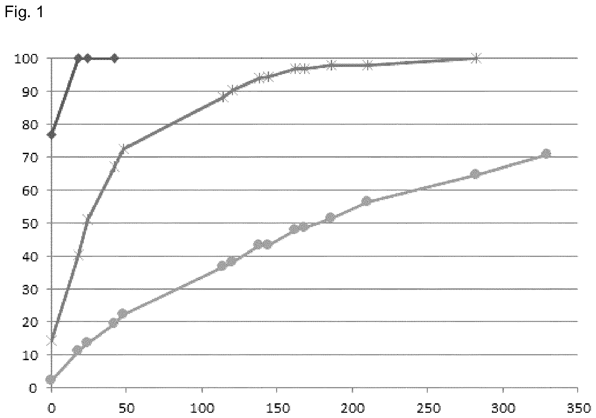

Das zeitabhängige Freisetzungsverhalten ist in der beigefügten Figur 1 angegeben. Dabei ist der freigesetzte Anteil an Harnstoff (Urea) [in Prozent] gegenüber der Zeit [in Stunden] aufgetragen. Die oberste Kurve bezieht sich auf Vergleichsbeispiel 2, die mittlere Kurve auf Vergleichsbeispiel 3 und die untere Kurve auf Beispiel 1.

Aus den Ergebnissen wird deutlich, dass die nur mit Polyharnstoff gemäß Vergleichsbeispiel 2 beschichteten Harnstoffgranulate sich sehr schnell auflösen (obere Kurve). Die nur mit Polyurethan beschichteten Granulate gemäß Vergleichsbeispiel 3 zeigen ein deutlich langsameres Auflösungsverhalten (mittlere Kurve).

Die mit Polyharnstoff und Polyurethan beschichteten Harnstoffgranulate gemäß Beispiel 1 zeigen ein nochmals stark verlangsamtes Auflösungsverhalten (untere Kurve). Hierdurch wird eine gewünschte Freisetzung des Düngemittels über einen verlängerten Zeitraum ermöglicht. Hierbei ist zu beachten, dass die insgesamt aufgebrachte Beschichtungsmenge in allen Versuchen identisch war.

Der erfindungsgemäße Effekt wird bereits mit einer geringen Gesamtbeschichtungsmenge von 2,3 Gew.-% erreicht. Im Vergleich hierzu betragen die Beschichtungsmengen, wie in WO 2012/109432 beschrieben, 4,3 % gemäß Beispiel 1, 5,5 % gemäß Beispiel 3 und 4,3 %, 5 % und 6 % gemäß Beispiel 4.

## Patentansprüche

1. Verfahren zur Herstellung von beschichteten harnstoffhaltigen Düngemittelteilchen, umfassend die folgenden Schritte:
A) Ausbildung mindestens einer Polyharnstoffschicht auf dem unbeschichteten harnstoffhaltigen Düngemittel, und sodann
B) Ausbildung mindestens einer Polyurethanschicht auf der mindestens einen Polyharnstoffschicht auf dem harnstoffhaltigen Düngemittel,
wobei das Gewichtsverhältnis der Polyharnstoffschicht zur Polyurethanschicht von 4:1 bis 1:4 beträgt und, sofern das beschichtete harnstoffhaltige Düngemittelteilchen mehrere Polyurethanschichten oder Polyharnstoffschichten aufweist, sich das Gewichtsverhältnis auf die Summe der jeweiligen Polyharnstoffschichten und Polyurethanschichten bezieht.

2. Verfahren nach Anspruch 1, **dadurch gekennzeichnet, dass** der Harnstoffgehalt im harnstoffhaltigen Düngemittel mindestens 30 Gew.-%, vorzugsweise mindestens 50 Gew.-% bezogen auf das harnstoffhaltige Düngemittel, beträgt.

3. Verfahren nach Anspruch 1 oder 2, **dadurch gekennzeichnet, dass** die Ausbildung der Polyharnstoffschicht durch die Umsetzung einer organischen, mehr als eine Isocyanatgruppe enthaltenden Isocyanatkomponente mit Wasser auf der Oberfläche der harnstoffhaltigen Düngemittelteilchen erfolgt.

4. Verfahren nach einem der Ansprüche 1 bis 3, umfassend in Schritt A) die folgenden Schritte:
A1) Aufbringen von Wasser oder Dampf auf harnstoffhaltige Düngemittelteilchen, um mit Wasser beschichtete Düngemittelteilchen zu erhalten,
A2) Aufbringen einer organischen, mindestens zwei Isocyanatgruppen enthaltenden Isocyanat-Komponente auf die mit Wasser beschichteten Düngemittelteilchen und Umsetzung damit unter Ausbildung einer Polyharnstoffschicht auf den harnstoffhaltigen Düngemittelteilchen.

5. Verfahren nach einem der Ansprüche 1 bis 4, umfassend in Schritt B) den folgenden Schritt:
B1) Aufbringen einer Polyolkomponente und einer Isocyanatkomponente auf das harnstoffhaltige Düngemittelteilchen aus Schritt A) und Umsetzung zu einer Polyurethanschicht auf der Polyharnstoffschicht.

6. Verfahren nach einem der Ansprüche 1 bis 5, **dadurch gekennzeichnet, dass** die Ausbildung der Polyharnstoffschicht und/oder die Ausbildung der Polyurethanschicht in Gegenwart eines, vorzugsweise basischen, Katalysators erfolgt.

7. Verfahren nach Anspruch 6, **dadurch gekennzeichnet, dass** als Katalysator mindestens eine Amin-Verbindung eingesetzt wird.

8. Verfahren nach Anspruch 6 oder 7, **dadurch gekennzeichnet, dass** der Katalysator zur Ausbildung der Polyharnstoffschicht nach der Isocyanatkomponente und/oder der Katalysator zur Ausbildung der Polyurethanschicht nach der Polyolkomponente und nach der Isocyanatkomponente auf das harnstoffhaltige Düngemittel aufgebracht wird.

9. Verfahren nach einem der Ansprüche 1 bis 8, **dadurch gekennzeichnet, dass** die Polyharnstoffschicht und die Polyurethanschicht in einer Menge von mindestens jeweils 0,5 Gew.-%, vorzugsweise mindestens jeweils 0,75 Gew.-%, bezogen auf die unbehandelten harnstoffhaltigen Düngemittelteilchen, ausgebildet werden.

10. Verfahren nach einem der Ansprüche 1 bis 9, **dadurch gekennzeichnet, dass** die harnstoffhaltigen Düngemittelteilchen mindestens einen Ureaseinhibitor enthalten.

11. Verfahren nach einem der Ansprüche 1 bis 10, **dadurch gekennzeichnet, dass** zur Ausbildung der Polyurethanschicht mindestens ein Polyol, ausgewählt aus Cardol, Cardanol, Derivaten oder Oligomeren von Cardol oder Cardanol, Kondensationsprodukten von Phenol und mindestens einem Aldehyd oder Gemischen davon eingesetzt wird.

12. Verfahren nach einem der Ansprüche 1 bis 11, **dadurch gekennzeichnet, dass** jeweils nur eine Polyharnstoffschicht und Polyurethanschicht vorliegen.

13. Beschichtete harnstoffhaltige Düngemittelteilchen, umfassend auf dem unbeschichteten harnstoffhaltigen Düngemittel mindestens eine Polyharnstoffschicht und weiterhin umfassend auf der mindestens einen Polyharnstoffschicht mindestens eine Polyurethanschicht, wobei das Gewichtsverhältnis der Polyharnstoffschicht zur Polyurethanschicht von 4:1 bis 1:4 beträgt und, sofern das beschichtete harnstoffhaltige Düngemittelteilchen mehrere Polyurethanschichten oder Polyharnstoffschichten aufweist, sich das Gewichtsverhältnis auf die Summe der jeweiligen Polyharnstoffschichten und Polyurethanschichten bezieht.

14. Beschichtetes harnstoffhaltiges Düngemittel nach Anspruch 13, **dadurch gekennzeichnet, dass** die Polyurethanschicht das Umsetzungsprodukt mindestens einer Isocyanatkomponente mit mindestens einer Polyolkomponente ist, die mindestens ein Polyol, ausgewählt aus Cardol, Cardanol, Derivaten oder Oligomeren von Cardol oder Cardanol, Kondensationsprodukten von Phenol und mindestens einem Aldehyd oder Gemischen davon enthält.

15. Beschichtete harnstoffhaltige Düngemittelteilchen nach Anspruch 13 oder 14, **dadurch gekennzeichnet, dass** sie zusätzlich mindestens einen Ureaseinhibitor enthalten.

## Claims

1. A process for producing coated urea-containing fertilizer particles, comprising the following steps:
A) forming at least one polyurea layer on the uncoated urea-containing fertilizer, and then
B) forming at least one polyurethane layer on the at least one polyurea layer on the urea-containing fertilizer,
wherein the weight ratio of the polyurea layer to the polyurethane layer is from 4:1 to 1:4 and, if the coated urea-containing fertilizer particle has multiple polyurethane layers or polyurea layers, the weight ratio is based on the sum total of the respective polyurea layers and polyurethane layers.

2. The process as claimed in claim 1, **characterized in that** the urea content in the urea-containing fertilizer is at least 30% by weight, preferably at least 50% by weight, based on the urea-containing fertilizer.

3. The process as claimed in claim 1 or 2, **characterized in that** the polyurea layer is formed by the reaction of an organic isocyanate component containing more than one isocyanate group with water on the surface of the urea-containing fertilizer particles.

4. The process as claimed in any of claims 1 to 3, comprising, in step A), the following steps:
A1) applying water or steam to urea-containing fertilizer particles in order to obtain water-coated fertilizer particles,
A2) applying an organic isocyanate component containing at least two isocyanate groups to the water-coated fertilizer particles and reacting it therewith to form a polyurea layer on the urea-containing fertilizer particles.

5. The process as claimed in any of claims 1 to 4, comprising, in step B), the following step:
B1) applying a polyol component and an isocyanate component to the urea-containing fertilizer particle from step A) and converting them to a polyurethane layer on the polyurea layer.

6. The process as claimed in any of claims 1 to 5, **characterized in that** the polyurea layer is formed and/or the polyurethane layer is formed in the presence of a preferably basic catalyst.

7. The process as claimed in claim 6, **characterized in that** the catalyst used is at least one amine compound.

8. The process as claimed in claim 6 or 7, **characterized in that** the catalyst to form the polyurea layer is applied to the urea-containing fertilizer after the isocyanate component and/or the catalyst to form the polyurethane layer after the polyol component and after the isocyanate component.

9. The process as claimed in any of claims 1 to 8, **characterized in that** the polyurea layer and the polyurethane layer are each formed in an amount of at least 0.5% by weight, preferably at least 0.75% by weight, based on the untreated urea-containing fertilizer particles.

10. The process as claimed in any of claims 1 to 9, **characterized in that** the urea-containing fertilizer particles comprise at least one urease inhibitor.

11. The process as claimed in any of claims 1 to 10, **characterized in that** the polyurethane layer is formed using at least one polyol selected from cardol, cardanol, derivatives or oligomers of cardol or cardanol, condensation products of phenol and at least one aldehyde or mixtures thereof.

12. The process as claimed in any of claims 1 to 11, **characterized in that** only one polyurea layer and only one polyurethane layer are present.

13. Coated urea-containing fertilizer particles, comprising, on the uncoated urea-containing fertilizer, at least one polyurea layer and further comprising, on the at least one polyurea layer, at least one polyurethane layer, wherein the weight ratio of the polyurea layer to the polyurethane layer is from 4:1 to 1:4 and, if the coated urea-containing fertilizer particle has multiple polyurethane layers or polyurea layers, the weight ratio is based on the sum total of the respective polyurea layers and polyurethane layers.

14. Coated urea-containing fertilizer as claimed in claim 13, **characterized in that** the polyurethane layer is the reaction product of at least one isocyanate component with at least one polyol component comprising at least one polyol selected from cardol, cardanol, derivatives or oligomers of cardol or cardanol, condensation products of phenol and at least one aldehyde or mixtures thereof.

15. Coated urea-containing fertilizer particles as claimed in claim 13 or 14, **characterized in that** they additionally comprise at least one urease inhibitor.

## Revendications

1. Procédé pour la préparation de particules d'engrais revêtues contenant de l'urée, comprenant les étapes suivantes :
A) formation d'au moins une couche de polyurée sur l'engrais non revêtu contenant de l'urée, et ensuite
B) formation d'au moins une couche de polyuréthane sur l'au moins une couche de polyurée sur l'engrais contenant de l'urée,
le rapport en poids de la couche de polyurée sur la couche de polyuréthane étant de 4 : 1 à 1 : 4 et, pour autant que la particule d'engrais revêtue contenant de l'urée présente plusieurs couches de polyuréthane ou plusieurs couches de polyurée, le rapport en poids se rapporte à la somme des couches de polyurée et des couches de polyuréthane respectives.

2. Procédé selon la revendication 1, **caractérisé en ce que** la teneur en urée dans l'engrais contenant de l'urée est d'au moins 30 % en poids, de préférence d'au moins 50 % en poids, par rapport à l'engrais contenant de l'urée.

3. Procédé selon la revendication 1 ou 2, **caractérisé en ce que** la formation de la couche de polyurée est réalisée par la transformation d'un composant organique de type isocyanate contenant plus d'un groupe isocyanate avec de l'eau à la surface des particules d'engrais contenant de l'urée.

4. Procédé selon l'une quelconque des revendications 1 à 3, comprenant dans l'étape A) les étapes suivantes
A1) application d'eau ou de vapeur sur des particules d'engrais contenant de l'urée, afin d'obtenir des particules d'engrais revêtues avec de l'eau,
A2) application d'un composant organique de type isocyanate contenant au moins deux groupes isocyanate sur les particules d'engrais revêtues avec de l'eau et transformation avec celle-ci avec obtention d'une couche de polyurée sur les particules d'engrais contenant de l'urée.

5. Procédé selon l'une quelconque des revendications 1 à 4, comprenant dans l'étape B) l'étape suivante :
B1) application d'un composant de type polyol et d'un composant de type isocyanate sur la particule d'engrais contenant de l'urée de l'étape A) et transformation pour donner une couche de polyuréthane sur la couche de polyurée.

6. Procédé selon l'une quelconque des revendications 1 à 5, **caractérisé en ce que** la formation de la couche de polyurée et/ou la formation de la couche de polyuréthane est réalisée en présence d'un catalyseur, de préférence basique.

7. Procédé selon la revendication 6, **caractérisé en ce qu'**au moins un composé de type amine est utilisé en tant que catalyseur.

8. Procédé selon la revendication 6 ou 7, **caractérisé en ce que** le catalyseur pour la formation de la couche de polyurée est appliqué sur l'engrais contenant de l'urée après le composant de type isocyanate et/ou le catalyseur pour la formation de la couche de polyuréthane est appliqué sur l'engrais contenant de l'urée après le composant de type polyol et après le composant de type isocyanate.

9. Procédé selon l'une quelconque des revendications 1 à 8, **caractérisé en ce que** la couche de polyurée et la couche de polyuréthane sont formées en une quantité d'au moins à chaque fois 0,5 % en poids, de préférence d'au moins à chaque fois 0,75 % en poids, par rapport aux particules d'engrais non traitées contenant de l'urée.

10. Procédé selon l'une quelconque des revendications 1 à 9, **caractérisé en ce que** les particules d'engrais contenant de l'urée contiennent au moins un inhibiteur d'uréase.

11. Procédé selon l'une quelconque des revendications 1 à 10, **caractérisé en ce que** pour la formation de la couche de polyuréthane, au moins un polyol est utilisé, choisi parmi le cardol, le cardanol, des dérivés ou des oligomères de cardol ou de cardanol, des produits de condensation de phénol et d'au moins un aldéhyde et des mélanges correspondants.

12. Procédé selon l'une quelconque des revendications 1 à 11, **caractérisé en ce qu'**à chaque fois seulement une couche de polyurée et une couche de polyuréthane sont présentes.

13. Particules d'engrais revêtues contenant de l'urée, comprenant sur l'engrais non revêtu contenant de l'urée au moins une couche de polyurée et en outre comprenant sur l'au moins une couche de polyurée au moins une couche de polyuréthane, le rapport en poids de la couche de polyurée sur la couche de polyuréthane étant de 4 : 1 à 1 : 4 et, pour autant que la particule d'engrais revêtue contenant de l'urée présente plusieurs couches de polyuréthane ou plusieurs couches de polyurée, le rapport en poids se rapporte à la somme des couches de polyurée et des couches de polyuréthane respectives.

14. Engrais revêtus contenant de l'urée selon la revendication 13, **caractérisé en ce que** la couche de polyuréthane est le produit de transformation d'au moins un composant de type isocyanate avec au moins un composant de type polyol qui contient au moins un polyol, choisi parmi le cardol, le cardanol, des dérivés ou des oligomères de cardol ou de cardanol, des produits de condensation de phénol et d'au moins un aldéhyde et des mélanges correspondants.

15. Particules d'engrais revêtues contenant de l'urée selon la revendication 13 ou 14, **caractérisées en ce qu'**elles contiennent de plus au moins un inhibiteur d'uréase.
